# EUROPEAN PATENT APPLICATION

(11) **EP 4 560 550 A1**
(43) Date of publication of application: **28.05.2025**
(21) Application number: 23856458.7
(22) Date of filing: 08.08.2023
(51) Int. Cl.: G06Q 10/02

(54) **METHOD AND APPARATUS FOR PROCESSING PASSENGER NAMES IN CIVIL AVIATION OPEN PASSENGER RESERVATION SYSTEM**

(30) Priority: 23.08.2022 CN 202211013905
(71) Applicant: Travelsky Technology Limited, Beijing 101318 (CN)
(72) Inventor: XIONG, Guomin, Beijing 101318 (CN); GUO, Hongbo, Beijing 101318 (CN); LI, Bin, Beijing 101318 (CN); TU, Weiping, Beijing 101318 (CN); HUAN, Zhengyong, Beijing 101318 (CN)
(74) Representative: Penza, Giancarlo
(86) International application number: PCT/CN2023/111633
(87) International publication number: WO 2024/041368

(57) **Abstract**

The present invention provides a method and an apparatus for processing passenger names in a civil aviation open passenger reservation system. The method includes: acquiring an unreserved check-in passenger reservation record in a civil aviation open passenger reservation system, and extracting all common items, existing passenger items and historical passenger items, to obtain a common item set, an existing passenger name set and a historical passenger name set; and extracting, from the unreserved check-in passenger reservation record, existing passenger information associated with each existing passenger item, to obtain an existing passenger mapping set, and extracting, from the unreserved check-in passenger reservation record, historical passenger information associated with each historical passenger item, to obtain a historical passenger mapping set. By extracting the common items, the existing passenger items and the historical passenger items from the unreserved check-in passenger reservation record, and obtaining the existing passenger mapping set and the historical passenger mapping set, the present invention solves the problem of the names of passengers being inconsistent due to the fact that the passengers have checked in without reservations.

## Description

### Technical Field

The present invention claims the priority to the Chinese patent application No. 202211013905.3, titled "Method and Apparatus for Processing Passenger Names in Civil Aviation Open Passenger Reservation System", filed to the China National Intellectual Property Administration on August 23, 2022, which is incorporated herein in its entirety by reference.

### Background

A Customer Travel Record (CTR) based on the open platform storage technology, as core data of a civil aviation open passenger reservation system, records full-flow data of passenger traveling from reservation sales, passenger service to travel delivery. The civil aviation open passenger reservation system is responsible for synchronization and management of CTR order data, realizes reservation deal flows based on the CTR order data, provides reservation of flights and additional service products for airline customers, provides differentiated reservation services based on passenger values, supports reservation and retail demands of airlines and tracks changes in passenger reservation states.

At present, the civil aviation open passenger reservation system integrates content in departure check-in records (DCSNF) and a reservation passenger name records (ICSPNR) into the CTR structure. Passenger names are key content in the CTR. The passenger names in the DCSNF and the passenger names in the ICSPNR do not have the same definition. The passenger name in the DCSNF is divided into surname SNAME, first name FNAME and Chinese name CHINNAME. The passenger name in the ICSPNR only has one field definition. In general, a Univac Standard Airline Systems (USAS) code is followed by spells in storage. When there are both Chinese and English in the name or Chinese with an English suffix, host codes may appear at different positions of a whole name item. In the CTR, name content is managed based on different definitions, including the full-name field like ICSPNR and the multi-name field with separate DCSNF. In addition, CTR also defines its own structured name fields, including first name FNAM, surname FNAM and Chinese name CNAM.

Typically, a civil aviation passenger reservation system sends a passenger list to a civil aviation passenger departure system through messages. The civil aviation passenger departure system generates the DCSNF based on information in the passenger list messages. The civil aviation open passenger reservation system will analyze and save the ICSPNR when receiving it. The system will make analysis based on service logic, to obtain the content of SNAM, FNAM and CNAM therein.

However, when the passengers arrive at an airport for checking in without reservations (without flight reservation), and directly check in on the civil aviation passenger departure system, the civil aviation passenger departure system will generate the DCSNF, and then inform the civil aviation passenger reservation system through the messages to generate the ICSPNR. At that moment, when the civil aviation open passenger reservation system is updating the structured name items in CTR, it has already updated the content in the DCSNF. Hence, when content in the ICSPNR are updated later, the ICSPNR will not be analyzed while the passenger names will not be updated because the CTR already has the passenger name information and completes matching based on a pre-defined logic. In general, common passenger names, regardless from the DCSNF or ICSPNR, are all consistent. However, when the passenger name has Chinese with the English suffix, the passenger name will be inconsistent in expression in DCSNF and ICSPNR, thereby causing problems in service processing.

### Summary

In view of above, the present invention provides a method and an apparatus for processing passenger names in a civil aviation open passenger reservation system to solve the problem of the names of passengers being inconsistent due to the fact that the passengers have checked in without reservations in the civil aviation open passenger reservation system.

The Summary is provided to briefly introduce the concepts that will be described in detail in the Detailed Description of the Embodiments below. The Summary is intended neither to identify key features or essential features of the claimed technical solution, nor to limit the scope of the claimed technical solution.

A method for processing passenger names in a civil aviation open passenger reservation system includes:
acquiring an unreserved check-in passenger reservation record in a civil aviation open passenger reservation system;
extracting all common items, existing passenger items and historical passenger items from the unreserved check-in passenger reservation record, wherein the common items are record items without passenger identifiers or without passenger-name-containing text, the existing passenger items are non-common items with the passenger identifiers, and the historical passenger items are non-common items with the passenger-name-containing text;
obtaining a common item set, an existing passenger name set and a historical passenger name set based on the common items, the existing passenger items and the historical passenger items;
extracting, from the unreserved check-in passenger reservation record, existing passenger information associated with each existing passenger item in the existing passenger name set, to obtain an existing passenger mapping set for representing a mapping relationship between the existing passenger item and the existing passenger information, wherein an element key value in the existing passenger mapping set is an existing passenger serial number, and an element value in the in the existing passenger mapping set is a exclusive non-common item set; and
extracting, from the unreserved check-in passenger reservation record, historical passenger information associated with each historical passenger item in the historical passenger name set, to obtain a historical passenger mapping set for representing a mapping relationship between the historical passenger item and the historical passenger information, wherein an element key value in the historical passenger mapping set is a historical passenger serial number, and an element value in the historical passenger mapping set is a exclusive non-common item sets.

An apparatus for processing passenger names in a civil aviation open passenger reservation system includes:
an acquisition unit, configured to acquire an unreserved check-in passenger reservation record in a civil aviation open passenger reservation system;
an extraction unit, configured to extract all common items, existing passenger items and historical passenger items from the unreserved check-in passenger reservation record, wherein the common items are record items without passenger identifiers or without passenger-name-containing text, the existing passenger items are non-common items with the passenger identifiers, and the historical passenger items are non-common items with the passenger-name-containing text;
a set determination unit, configured to obtain a common item set, an existing passenger name set and a historical passenger name set based on the common items, the existing passenger items and the historical passenger items;
an existing mapping set determination unit, configured to extract, from the unreserved check-in passenger reservation record, existing passenger information associated with each existing passenger item in the existing passenger name set, to obtain an existing passenger mapping set for representing a mapping relationship between the existing passenger item and the existing passenger information, wherein an element key value in the existing passenger mapping set is an existing passenger serial number, and an element value in the historical passenger mapping set is a exclusive non-common item set; and
a historical mapping set determination unit, configured to extract, from the unreserved check-in passenger reservation record, historical passenger information associated with each historical passenger item in the historical passenger name set, to obtain a historical passenger mapping set for representing a mapping relationship between the historical passenger item and the historical passenger information, wherein an element key value in the historical passenger mapping set is a historical passenger serial number, and an element value is a exclusive non-common item sets.

Based on to the above solution, disclosed are a method and an apparatus for processing passenger names in a civil aviation open passenger reservation system. The method includes: acquiring an unreserved check-in passenger reservation record in a civil aviation open passenger reservation system, and extracting all common items, existing passenger items and historical passenger items from the unreserved check-in passenger reservation record, to obtain a common item set, an existing passenger name set and a historical passenger name set; and extracting, from the unreserved check-in passenger reservation record, existing passenger information associated with each existing passenger item in the existing passenger name set, to obtain an existing passenger mapping set for representing a mapping relationship between the existing passenger item and the existing passenger information, and extracting, from the unreserved check-in passenger reservation record, historical passenger information associated with each historical passenger item in the historical passenger name set, to obtain a historical passenger mapping set for representing a mapping relationship between the historical passenger item and the historical passenger information. By extracting the common items, the existing passenger items and the historical passenger items from the same unreserved check-in passenger reservation record, and obtaining the existing passenger mapping set for representing the mapping relationship between the existing passenger items and the existing passenger information and the historical passenger mapping set for representing the mapping relationship between the historical passenger items and the historical passenger information, the present invention can associate the existing passenger information with the historical passenger information when there is an association between the existing passenger items and the historical passenger items, to solve the problem of the names of passengers being inconsistent due to the fact that the passengers have checked in without reservations in the civil aviation open passenger reservation system.

### Brief Description of the Drawings

In order to illustrate solutions in embodiments of the present invention or in the prior art more clearly, the drawings to be used in the description of the embodiments or the prior art will be introduced briefly below. Apparently, the drawings in the following description show merely the embodiments of the present invention, and those of ordinary skill in the art may still derive other drawings from the drawings disclosed without creative efforts.
FIG. 1 is a flow chart of a method for processing passenger names in a civil aviation open passenger reservation system according to an embodiment of the present invention;
FIG. 2 is a flow chart of a method for extracting, from an unreserved check-in passenger reservation record, existing passenger information associated with each existing passenger item in an existing passenger name set according to an embodiment of the present invention;
FIG. 3 is a flow chart of a method for extracting, from an unreserved check-in passenger reservation record, historical passenger information associated with each historical passenger item in a historical passenger name set according to an embodiment of the present invention; and
FIG. 4 is a schematic structural diagram of an apparatus for processing passenger names in a civil aviation open passenger reservation system according to an embodiment of the present invention.

### Detailed Description of the Embodiments

Hereinafter, the embodiments of the present invention will be described in further detail with reference to the drawings. Some embodiments of the present invention are shown in the drawings. However, it is understood that the present invention can be implemented in various forms, rather than be explained to be limited to the embodiments described herein. Rather, these embodiments are provided for a deeper and complete understanding of the present invention. It is understood that the drawings and embodiments of the present invention are only exemplary, rather than limiting the protection scope of the present invention.

Embodiments of the present invention provide a method and an apparatus for processing passenger names in a civil aviation open passenger reservation system. The method includes: acquiring an unreserved check-in passenger reservation record in a civil aviation open passenger reservation system, and extracting all common items, existing passenger items and historical passenger items from the unreserved check-in passenger reservation record, to obtain a common item set, an existing passenger name set and a historical passenger name set; and extracting, from the unreserved check-in passenger reservation record, existing passenger information associated with each existing passenger item in the existing passenger name set, to obtain an existing passenger mapping set for representing a mapping relationship between the existing passenger item and the existing passenger information, and extracting, from the unreserved check-in passenger reservation record, historical passenger information associated with each historical passenger item in the historical passenger name set, to obtain a historical passenger mapping set for representing a mapping relationship between the historical passenger item and the historical passenger information. By extracting the common items, the existing passenger items and the historical passenger items from the same unreserved check-in passenger reservation record, and obtaining the existing passenger mapping set for representing the mapping relationship between the existing passenger items and the existing passenger information and the historical passenger mapping set for representing the mapping relationship between the historical passenger items and the historical passenger information, the present invention can associate the existing passenger information with the historical passenger information when there is an association between the existing passenger items and the historical passenger items, to solve the problem of the names of passengers being inconsistent due to the fact that the passengers have checked in without reservations in the civil aviation open passenger reservation system.

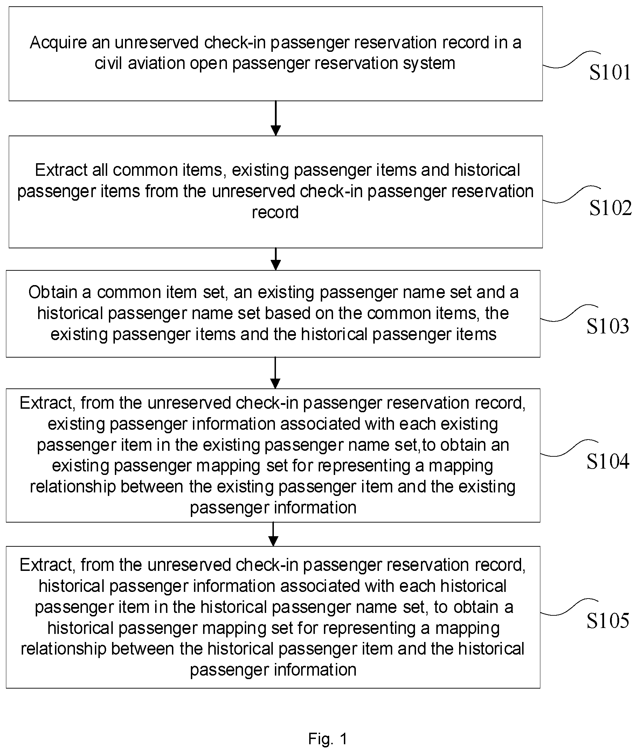

FIG. 1 shows a flow chart of a method for processing passenger names in a civil aviation open passenger reservation system according to an embodiment of the present invention, the method including:
at step of S101, acquiring an unreserved check-in passenger reservation record in the civil aviation open passenger reservation system;
at step of S102, extracting all common items, existing passenger items and historical passenger items from the unreserved check-in passenger reservation record;
wherein the common items are record items without passenger identifiers or without passenger-name-containing text. The common items include: extracting the common items, including update items UP/seat booking and occupation group items SCs /responsibility team items SB/freight items FA/flight segment items SG/group items GR, and a passenger name record item not exclusive to some passenger (AAPSGR==0). The passenger information is distinguished by existing and historical types and extracted based on a passenger name sequence (sequence in the passenger name record). A passenger serial number (1...n), a passenger name and a passenger name record item of the passenger are provided.

The existing passenger items are non-common items with the passenger identifiers, and the historical passenger items are non-common items with the passenger-name-containing text.

In particular, whether an existing item is a common item is judged based on whether the existing item in the passenger reservation record has the passenger identifier, and the existing item is a non-common item when there is the passenger identifier.

Whether an historical item is a common item is judged based on whether there is text in the historical item in the passenger reservation record and whether there is a passenger name in the text (that is, whether there is the passenger-name-containing text), and the historical item is a non-common item when there is the text in the historical item and there is the passenger name in the text; the historical item is a common item when there is the text in the historical item, but there is no passenger name in the text; and the historical item is a common item when there is no text in the historical item.

At last, the common items are extracted from the unreserved check-in passenger reservation record based on above judgment criteria.

It is to be specifically noted that the existing passenger items in the embodiment are specifically existing items of the unreserved check-in passenger reservation record; and the historical passenger items are historical items of the unreserved check-in passenger reservation record.

At step of S103, obtaining a common item set, an existing passenger name set and a historical passenger name set based on the common items, the existing passenger items and the historical passenger items;
wherein the existing passenger name set includes existing passenger serial numbers, and the historical passenger name set includes historical passenger serial numbers.

At step of S104, extracting, from the unreserved check-in passenger reservation record, existing passenger information associated with each existing passenger item in the existing passenger name set, to obtain an existing passenger mapping set for representing a mapping relationship between the existing passenger item and the existing passenger information;
wherein an element key value in the existing passenger mapping set is an existing passenger serial number, and an element values in the existing passenger mapping set is a exclusive non-common item set.

At step of S105,extracting, from the unreserved check-in passenger reservation record, historical passenger information associated with each historical passenger item in the historical passenger name set, to obtain a historical passenger mapping set for representing a mapping relationship between the historical passenger item and the historical passenger information;
wherein an element key value in the historical passenger mapping set is a historical passenger serial number, and an element value in the historical passenger mapping set is a exclusive non-common item sets.

In summary, the present invention provides a method for processing passenger names in a civil aviation open passenger reservation system. The method includes: acquiring an unreserved check-in passenger reservation record in a civil aviation open passenger reservation system, and extracting all common items, existing passenger items and historical passenger items from the unreserved check-in passenger reservation record, to obtain a common item set, an existing passenger name set and a historical passenger name set; and extracting, from the unreserved check-in passenger reservation record, existing passenger information associated with each existing passenger item in the existing passenger name set, to obtain an existing passenger mapping set for representing a mapping relationship between the existing passenger item and the existing passenger information, and extracting, from the unreserved check-in passenger reservation record, historical passenger information associated with each historical passenger item in the historical passenger name set, to obtain a historical passenger mapping set for representing a mapping relationship between the historical passenger item and the historical passenger information. By extracting the common items, the existing passenger items and the historical passenger items from the same unreserved check-in passenger reservation record, and obtaining the existing passenger mapping set for representing the mapping relationship between the existing passenger items and the existing passenger information and the historical passenger mapping set for representing the mapping relationship between the historical passenger items and the historical passenger information, the present invention can associate the existing passenger information with the historical passenger information when there is an association between the existing passenger items and the historical passenger items, to solve the problem of the names of passengers being inconsistent due to the fact that the passengers have checked in without reservations in the civil aviation open passenger reservation system.

In the above embodiment, the process of extracting the existing passenger items from the unreserved check-in passenger reservation record includes:
traversing all the record items starting from a header of the unreserved check-in passenger reservation record; sequentially judging whether the record item is a passenger name item based on whether a record item has a passenger identifier; when the record item is the existing passenger item, judging whether the record item is the existing passenger item based on whether the record item has an existing passenger item identifier; when the record item is the existing passenger item, judging whether the passenger name item is updated by a departure check-in record based on a departure update identifier; and when the passenger name item is updated by the departure check-in record, updating corresponding data in a reservation passenger name record to a surname field (SNAM field) and a first name field (FNAM field) in the passenger name item.

In the above embodiment, the process of extracting the historical passenger items from the unreserved check-in passenger reservation record includes:
traversing all the record items starting from a header of the unreserved check-in passenger reservation record; judging whether a record item is a passenger name item based on whether the record item has a passenger identifier; when the record item is the passenger name item, judging whether the record item is the historical passenger item based on whether the record item has a historical passenger item identifier; when the record item is the historical passenger item, judging whether the passenger name item is updated by a departure check-in record based on a departure update identifier; and when the passenger name item is updated by the departure check-in record, updating corresponding data in a reservation passenger name record to a surname field (SNAM field) and a first name field (FNAM field) in the passenger name item.

In order to further optimize the above embodiment, at the step of S103 of the above embodiment, the process of determining the common item set includes:
(1) judging whether there is a subsequent item in the passenger reservation record;
(2) when there is the subsequent item in the unreserved check-in passenger reservation record, judging whether an identification value of the subsequent item is a preset identification value for representing the common item,
wherein the preset identification value is decided based on actual needs, for example, the preset identification value is any one of 1, 2, 4, 5, 11 and 63.

When there is no subsequent item in the passenger reservation record, the process is ended.
(3) when the identification value of the subsequent item is the preset identification value for representing the common item, determining that the subsequent item is the common item, and continuing to judge whether the subsequent item is a responsibility team item; and
(4) extracting the subsequent item to the common item set when the subsequent item is not the responsibility team item.

After the subsequent item is extracted to the common item set, the subsequent item may be marked as "processed", so that during passenger information processing, the process can be skipped to the process of re-judging whether there is a subsequent item in the passenger reservation record.

In order to further optimize the above embodiment, the method further includes:
judging whether the subsequent item has an existing identifier when the subsequent item is the responsibility team item; and
determining that the responsibility team item is found, and setting a responsibility team finding tag as true when the subsequent item has the existing identifier.

In order to further optimize the embodiment, the method may further include:
judging whether the subsequent item is a name item when the subsequent item is not the common item;
judging whether the passenger identifier in the subsequent item is 0 when the subsequent item is not the name item; and
extracting the subsequent item to the common item set when the passenger identifier is 0.

Wherein, when the passenger identifier is not 0, or the passenger identifier is 0 and after the subsequent item is extracted to the common item set, the method may further include: marking the subsequent item as "processed", so that during passenger information processing, the process can be skipped to the process of re-judging whether there is a subsequent item in the passenger reservation record.

In order to further optimize the above embodiment, the process of determining the existing passenger name set includes:
judging whether the responsibility team finding tag is true when the subsequent item is the name item; and
extracting the subsequent item to the existing passenger name set when the responsibility team finding tag is not true.

To facilitate subsequent processing, after the subsequent item is extracted to the existing passenger name set, the subsequent item is marked as "processed", so that during passenger information processing, the process can be skipped to the process of re-judging whether there is a subsequent item in the passenger reservation record.

In order to further optimize the above embodiment, the process of determining the historical passenger name set includes:
extracting the subsequent item to the historical passenger name set when the responsibility team finding tag is true.

To facilitate subsequent processing, after the subsequent item is extracted to the historical passenger name set, the subsequent item is marked as "processed", so that during passenger information processing, the process can be skipped to the process of re-judging whether there is a subsequent item in the passenger reservation record.

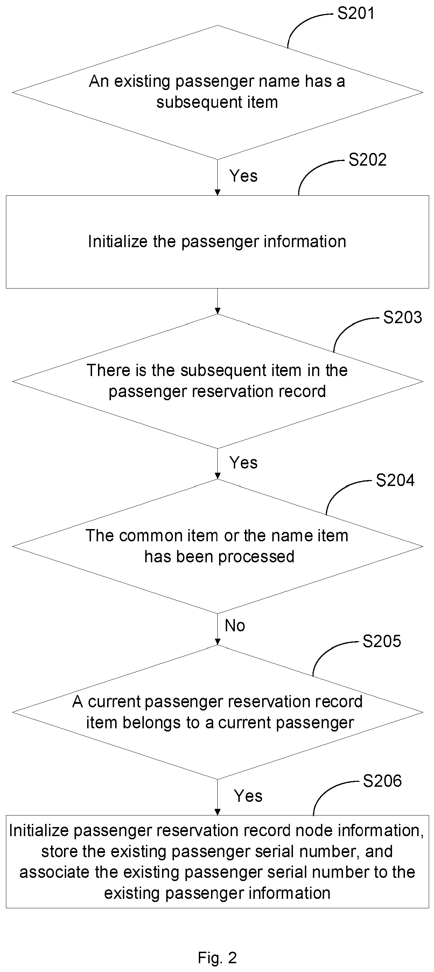

In order to further optimize the above embodiment, FIG. 2 shows a flow chart of a method for extracting, from the unreserved check-in passenger reservation record, the existing passenger information associated with each existing passenger item in the existing passenger name set according to an embodiment of the present invention, that is, the step of S104 includes:
at step of S201: judging whether an existing passenger name has a subsequent item, and when the existing passenger name has a subsequent item, executing step of S202,
wherein the process is ended when there is no subsequent item in the existing passenger name.

At step of S202: initializing the passenger information;
at step of S203: judging whether there is the subsequent item in the passenger reservation record; when there is the subsequent item in the passenger reservation record, executing step of S204; and
when there is no subsequent item in the passenger reservation record, skipping to the step of S201;
at step of S204: judging whether the common item or the name item has been processed; when the common item or the name item is not processed, executing step of S205; and
when the common item or the name item has been processed, returning to the step of S203;
at step of S205: judging whether a current passenger reservation record item belongs to a current passenger; when the current passenger reservation record item belongs to the current passenger, executing step of S206; and
when the current passenger reservation record item does not belong to the current passenger, returning to the step of S203; and
at step of S206: initializing passenger reservation record node information, storing the existing passenger serial number, and associating the existing passenger serial number to the existing passenger information.

Wherein a passenger reservation record node refers to package of the passenger reservation record node information, which is mainly configured to universal items of the passenger reservation record.

An element serial number marks a line number of an element in the passenger reservation record, which is finally assigned to a field serial number of each entry. The serial number of a header item is -1. Assignment rules of serial numbers of update items are as follows: the first update item (latest one) is assigned a value of 0, and the other update items are assigned values of from the sequence numbers preceding the displayed results.

A cancelation number is an operation number of information-to-history changing, which is acquired when the existing item identifier is 0. First, whether the passenger reservation record is canceled is judged based on the judgment rule that the passenger reservation record has been canceled when a cancelation identifier of the header item is 1.

When the passenger reservation record is not canceled, the value of the cancelation number is an index value of the first update item after the current element item; and when no such item is found, the value of the cancelation number is the index value of the first update item.

When the passenger reservation record has been canceled, whether the current element item is after the responsibility team item is judged first; when the current element item is after the responsibility team item, the value of the cancelation number is the index value of the first update item after the current element item; and when no such item is found, the value of the cancelation number is the index value of the first update item. When the current element item is before the responsibility team item, the value of the cancelation number is the index value of the first update item; when a text value of the update item includes the passenger reservation record number, searching is continued; an update item of which the text value excludes the passenger reservation record number is searched from the last update item, with the index value of such item being selected.

Flight segment node: being inherited from the passenger reservation record node, packaging the passenger node information in the passenger reservation record, flight segment items demanding additional persistent flight segment numbers and separate package.

Name node: being inherited from the passenger reservation record node, and packaging a piece of passenger name information in the passenger reservation record.

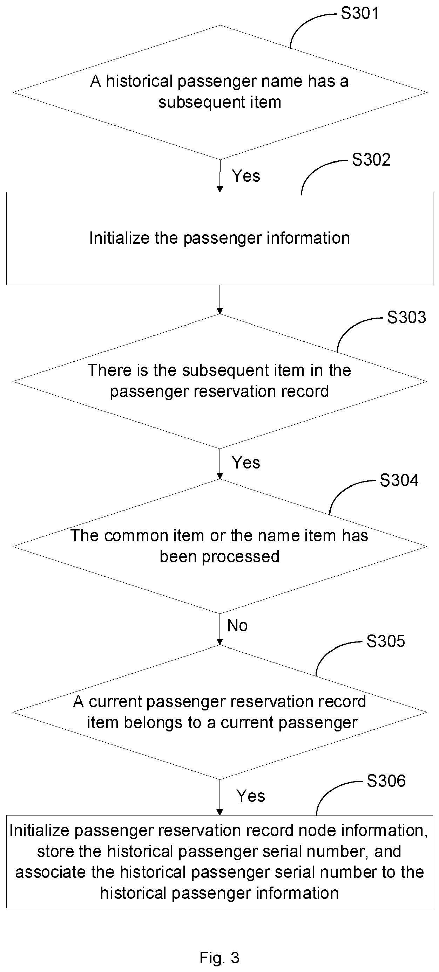

In order to further optimize the above embodiment, FIG. 3 shows a flow chart of a method for extracting, from the unreserved check-in passenger reservation record, the historical passenger information associated with each historical passenger item in the historical passenger name set provided by an embodiment of the present invention, that is, the step of S105 includes:
at step of S301: judging whether a historical passenger name has a subsequent item, and when the historical passenger name has the subsequent item, executing step of S302,
wherein the process is ended when there is no subsequent item in the historical passenger name;
at step of S302: initializing the passenger information;
at step of S303: judging whether there is the subsequent item in the passenger reservation record; when there is the subsequent item in the passenger reservation record, executing step of S304; and
when there is no subsequent item in the passenger reservation record, skipping to step S301;
at step of S304: judging whether the common item or the name item has been processed; when the common item or the name item is not processed, executing step of S305; and
when the common item or the name item has been processed, returning to the step of S303;
at step of S305: judging whether a current passenger reservation record item belongs to a current passenger; when the current passenger reservation record item belongs to the current passenger,, executing step of S306; and
when the current passenger reservation record item does not belong to the current passenger,, returning to the step of S303; and
at step of S306: initializing passenger reservation record node information, storing the historical passenger serial number, and associating the historical passenger serial number to the historical passenger information.

Corresponding to the above method embodiment, the present invention further provides an apparatus for processing passenger names in a civil aviation open passenger reservation system.

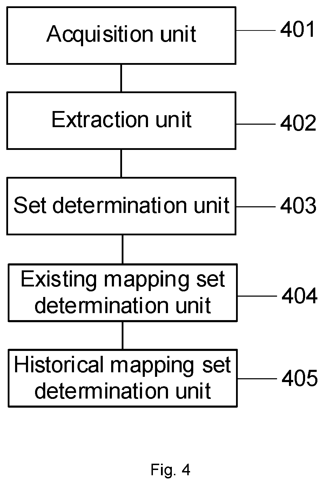

FIG. 4 shows a schematic structural diagram of an apparatus for processing passenger names in a civil aviation open passenger reservation system according to an embodiment of the present invention, the apparatus comprising:
an acquisition unit 401, configured to acquire an unreserved check-in passenger reservation record in a civil aviation open passenger reservation system;
an extraction unit 402, configured to extract all common items, existing passenger items and historical passenger items from the unreserved check-in passenger reservation record, wherein the common items are record items without passenger identifiers or without passenger-name-containing text, the existing passenger items are non-common items with the passenger identifiers, and the historical passenger items are non-common items with the passenger-name-containing text;
a set determination unit 403, configured to obtain a common item set, an existing passenger name set and a historical passenger name set on the basis of the common items, the existing passenger items and the historical passenger items;
an existing mapping set determination unit 404, configured to extract, from the unreserved check-in passenger reservation record, existing passenger information associated with each existing passenger item in the existing passenger name set, to obtain an existing passenger mapping set for representing a mapping relationship between the existing passenger item and the existing passenger information, wherein an element key value in the existing passenger mapping set is an existing passenger serial number, and an element value in the in the existing passenger mapping set is a exclusive non-common item set; and
a historical mapping set determination unit 405, configured to extract, from the unreserved check-in passenger reservation record, historical passenger information associated with each historical passenger item in the historical passenger name set, to obtain a historical passenger mapping set for representing a mapping relationship between the historical passenger item and the historical passenger information, wherein an element key value in the historical passenger mapping set is a historical passenger serial number, and an element value in the historical passenger mapping set is a exclusive non-common item set.

In summary, the present invention provides an apparatus for processing passenger names in a civil aviation open passenger reservation system. The apparatus is configured to acquire an unreserved check-in passenger reservation record in a civil aviation open passenger reservation system, and extract all common items, existing passenger items and historical passenger items from the unreserved check-in passenger reservation record, to obtain a common item set, an existing passenger name set and a historical passenger name set; and extract, from the unreserved check-in passenger reservation record, existing passenger information associated with each existing passenger item in the existing passenger name set, to obtain an existing passenger mapping set for representing a mapping relationship between the existing passenger item and the existing passenger information, and extract, from the unreserved check-in passenger reservation record, historical passenger information associated with each historical passenger item in the historical passenger name set, to obtain a historical passenger mapping set for representing a mapping relationship between the historical passenger item and the historical passenger information. By extracting the common items, the existing passenger items and the historical passenger items from the same unreserved check-in passenger reservation record, and obtaining the existing passenger mapping set for representing the mapping relationship between the existing passenger item and the existing passenger information and the historical passenger mapping set for representing the mapping relationship between the historical passenger item and the historical passenger information, the present invention can associate the existing passenger information with the historical passenger information when there is an association between the existing passenger items and the historical passenger items, to solve the problem of the names of passengers being inconsistent due to the fact that the passengers have checked in without reservations in the civil aviation open passenger reservation system.

In order to further optimize the above embodiment, the extraction unit 402 may be configured to:
traverse all record items starting from a header of the unreserved check-in passenger reservation record;
sequentially judge whether each of the record items has a passenger identifier for judging whether a record item is a passenger name item;
when the record item is the passenger name item, judge whether the record item is an existing passenger item based on whether the record item has an existing passenger item identifier;
when the record item is the existing passenger item, judge whether the passenger name item is updated by a departure check-in record based on a departure update identifier; and
when the passenger name item is updated by the departure check-in record, update corresponding data in a reservation passenger name record to a surname field and a first name field in the passenger name item.

In order to further optimize the above embodiment, the extraction unit may be further configured to:
traverse all the record items starting from a header of the unreserved check-in passenger reservation record;
sequentially judge whether each of the record items has a passenger identifier for judging whether a record item is a passenger name item;
when the record item is the passenger name item, judge whether the record item is the historical passenger item based on whether the record item has a historical passenger item identifier;
when the record item is the historical passenger item, judge whether the passenger name item is updated by a departure check-in record based on a departure update identifier; and
when the passenger name item is updated by the departure check-in record, update corresponding data in a reservation passenger name record to a surname field and a first name field in the passenger name item.

In order to further optimize the above embodiment, the set determination unit 403 may comprise a common item set determination subunit,
wherein the common item set determination subunit is configured to:
judge whether there is a subsequent item in the unreserved check-in passenger reservation record;
when there is the subsequent item in the unreserved check-in passenger reservation record, judge whether an identification value of the subsequent item is a preset identification value for representing the common item;
when the identification value of the subsequent item is the preset identification value for representing the common item, determine that the subsequent item is the common item, and continue to judge whether the subsequent item is a responsibility team item; and
extract the subsequent item to the common item set when the subsequent item is not the responsibility team item.

In order to further optimize the above embodiment, the common item set determination subunit is further configured to:
judge whether the subsequent item has an existing identifier when the subsequent item is the responsibility team item; and
determine that the responsibility team item is found, and set a responsibility team finding tag as true when the subsequent item has the existing identifier.

In order to further optimize the above embodiment, the common item set determination subunit is further configured to:
judge whether the subsequent item is a name item when the subsequent item is not the common item;
judge whether the passenger identifier in the subsequent item is 0 when the subsequent item is not the name item; and
extract the subsequent item to the common item set when the passenger identifier is 0.

In order to further optimize the above embodiment, the set determination unit 403 may comprise an existing item set determination subunit,
wherein the existing item set determination subunit is configured to:
judge whether the responsibility team finding tag is true when the subsequent item is the name item; and
extract the subsequent item to the existing passenger name set when the responsibility team finding tag is not true.

In order to further optimize the above embodiment, the set determination unit may comprise a historical item set determination subunit,
wherein the historical item set determination subunit is configured to:
extract the subsequent item to the historical passenger name set when the responsibility team finding tag is true.

In order to further optimize the above embodiment, the existing mapping set determination unit 404 may be configured to:
judge whether an existing passenger name has a subsequent item;
when the existing passenger name has a subsequent item, initialize the passenger information;
judge whether there is the subsequent item in the passenger reservation record;
when there is the subsequent item in the passenger reservation record, judge whether the common item or the name item has been processed;
judge whether a current passenger reservation record item belongs to a current passenger when the common item or the name item is not processed; and
when the current passenger reservation record item belongs to the current passenger, initialize passenger reservation record node information, store the existing passenger serial number, and associate the existing passenger serial number to the existing passenger information.

In order to further optimize the above embodiment, the historical mapping set determination unit 405 may be configured to:
judge whether a historical passenger name has a subsequent item;
when the historical passenger name has the subsequent item, initialize the passenger information;
judge whether there is the subsequent item in the passenger reservation record;
when there is the subsequent item in the passenger reservation record, judge whether the common item or the name item has been processed;
judge whether a current passenger reservation record item belongs to a current passenger when the common item or the name item is not processed; and
when the current passenger reservation record item belongs to the current passenger, initialize passenger reservation record node information, store the historical passenger serial number, and associate the historical passenger serial number to the historical passenger information.

It is to be noted that working principles of each constituent in the embodiments of the apparatus can be referred to in the corresponding part of the embodiments of the method, which is not repeated here.

The subject matter has been described using a language specific to structural features and/or method logic actions, but it is to be understood that the subject matter defined in the appended claims may not necessarily be limited to the features or actions described above. Rather, the specific features and actions described above are only example forms used to implement the claims.

Several implementation details, although included in the above discussion, should not be construed as limitations on the scope of the present invention. Some features described in the context of an individual embodiment may be implemented in combination in a single embodiment. Rather, various features described in the context of a single embodiment may be implemented in multiple embodiments separately or in any proper sub-combination.

The above description is only to illustrate preferred embodiments of the present invention and technical principles applied. Those skilled in the art should understand that the invention scope involved in the present invention is not limited to the technical solution formed by combinations of the above technical features, but should also encompass other technical solutions formed by any combination of the above technical features or equivalents thereof without departing from the concepts of the present invention, for example, technical solutions formed by mutual replacement of the above features and the technical features with similar functions disclosed in the present invention (not limited thereto).

## Claims

1. A method for processing passenger names in a civil aviation open passenger reservation system, comprising:
acquiring an unreserved check-in passenger reservation record in a civil aviation open passenger reservation system;
extracting all common items, existing passenger items and historical passenger items from the unreserved check-in passenger reservation record, wherein the common items are record items without passenger identifiers or without passenger-name-containing text, the existing passenger items are non-common items with the passenger identifiers, and the historical passenger items are non-common items with the passenger-name-containing text;
obtaining a common item set, an existing passenger name set and a historical passenger name set based on the common items, the existing passenger items and the historical passenger items;
extracting, from the unreserved check-in passenger reservation record, existing passenger information associated with each existing passenger item in the existing passenger name set, to obtain an existing passenger mapping set for representing a mapping relationship between the existing passenger item and the existing passenger information, wherein an element key value in the existing passenger mapping set is an existing passenger serial number, and an element value in the in the existing passenger mapping set is a exclusive non-common item set; and
extracting, from the unreserved check-in passenger reservation record, historical passenger information associated with each historical passenger item in the historical passenger name set, to obtain a historical passenger mapping set for representing a mapping relationship between the historical passenger item and the historical passenger information, wherein an element key value in the historical passenger mapping set is a historical passenger serial number, and an element value in the historical passenger mapping set is a exclusive non-common item set.

2. The method as claimed in claim 1, wherein the extracting, from the unreserved check-in passenger reservation record, existing passenger information associated with each existing passenger item in the existing passenger name set comprises:
traversing all record items starting from a header of the unreserved check-in passenger reservation record;
sequentially judging whether each of the record items has a passenger identifier for judging whether a record item is a passenger name item;
when the record item is the passenger name item, judging whether the record item is an existing passenger item based on whether the record item has an existing passenger item identifier;
when the record item is the existing passenger item, judging whether the passenger name item is updated by a departure check-in record based on a departure update identifier; and
when the passenger name item is updated by the departure check-in record, updating corresponding data in a reservation passenger name record to a surname field and a first name field in the passenger name item.

3. The method as claimed in claim 1, wherein the extracting, from the unreserved check-in passenger reservation record, historical passenger information associated with each historical passenger item in the historical passenger name set comprises:
traversing all the record items starting from a header of the unreserved check-in passenger reservation record;
sequentially judging whether each of the record items has a passenger identifier for judging whether a record item is a passenger name item;
when the record item is the passenger name item, judging whether the record item is the historical passenger item based on whether the record item has a historical passenger item identifier;
when the record item is the historical passenger item, judging whether the passenger name item is updated by a departure check-in record based on a departure update identifier; and
when the passenger name item is updated by the departure check-in record, updating corresponding data in a reservation passenger name record to a surname field and a first name field in the passenger name item.

4. The method as claimed in claim 1, wherein determining the common item set comprises:
judging whether there is a subsequent item in the unreserved check-in passenger reservation record;
when there is the subsequent item in the unreserved check-in passenger reservation record, judging whether an identification value of the subsequent item is a preset identification value for representing the common item;
when the identification value of the subsequent item is the preset identification value for representing the common item, determining that the subsequent item is the common item, and continuing to judge whether the subsequent item is a responsibility team item; and
extracting the subsequent item to the common item set when the subsequent item is not the responsibility team item.

5. The method as claimed in claim 4, further comprising:
judging whether the subsequent item has an existing identifier when the subsequent item is the responsibility team item; and
determining that the responsibility team item is found, and setting a responsibility team finding tag as true when the subsequent item has the existing identifier.

6. The method according to claim 4, further comprising:
judging whether the subsequent item is a name item when the subsequent item is not the common item;
judging whether the passenger identifier in the subsequent item is 0 when the subsequent item is not the name item; and
extracting the subsequent item to the common item set when the passenger identifier is 0.

7. The method as claimed in claim 6, wherein determining the existing passenger name set comprises:
judging whether the responsibility team finding tag is true when the subsequent item is the name item; and
extracting the subsequent item to the existing passenger name set when the responsibility team finding tag is not true.

8. The method as claimed in claim 7, wherein determining the historical passenger name set comprises:
extracting the subsequent item to the historical passenger name set when the responsibility team finding tag is true.

9. The method as claimed in claim 1, wherein the extracting, from the unreserved check-in passenger reservation record, existing passenger information associated with each existing passenger item in the existing passenger name set comprises:
judging whether an existing passenger name has a subsequent item;
when the existing passenger name has a subsequent item, initializing the passenger information;
judging whether there is the subsequent item in the passenger reservation record;
when there is the subsequent item in the passenger reservation record, judging whether the common item or the name item has been processed;
judging whether a current passenger reservation record item belongs to a current passenger when the common item or the name item is not processed; and
when the current passenger reservation record item belongs to the current passenger, initializing passenger reservation record node information, storing the existing passenger serial number, and associating the existing passenger serial number to the existing passenger information.

10. The method as claimed in claim 1, wherein the extracting, from the unreserved check-in passenger reservation record, historical passenger information associated with each historical passenger item in the historical passenger name set comprises:
judging whether a historical passenger name has a subsequent item;
when the historical passenger name has the subsequent item, initializing the passenger information;
judging whether there is the subsequent item in the passenger reservation record;
when there is the subsequent item in the passenger reservation record, judging whether the common item or the name item has been processed;
judging whether a current passenger reservation record item belongs to a current passenger when the common item or the name item is not processed; and
when the current passenger reservation record item belongs to the current passenger, initializing passenger reservation record node information, storing the historical passenger serial number, and associating the historical passenger serial number to the historical passenger information.

11. An apparatus for processing passenger names in a civil aviation open passenger reservation system, comprising:
an acquisition unit, configured to acquire an unreserved check-in passenger reservation record in a civil aviation open passenger reservation system;
an extraction unit, configured to extract all common items, existing passenger items and historical passenger items from the unreserved check-in passenger reservation record, wherein the common items are record items without passenger identifiers or without passenger-name-containing text, the existing passenger items are non-common items with the passenger identifiers, and the historical passenger items are non-common items with the passenger-name-containing text;
a set determination unit, configured to obtain a common item set, an existing passenger name set and a historical passenger name set based on the common items, the existing passenger items and the historical passenger items;
an existing mapping set determination unit, configured to extract, from the unreserved check-in passenger reservation record, existing passenger information associated with each existing passenger item in the existing passenger name set, to obtain an existing passenger mapping set for representing a mapping relationship between the existing passenger item and the existing passenger information, wherein an element key value in the existing passenger mapping set is an existing passenger serial number, and an element value in the in the existing passenger mapping set is a exclusive non-common item set; and
a historical mapping set determination unit, configured to extract, from the unreserved check-in passenger reservation record, historical passenger information associated with each historical passenger item in the historical passenger name set, to obtain a historical passenger mapping set for representing a mapping relationship between the historical passenger item and the historical passenger information, wherein an element key value in the historical passenger mapping set is a historical passenger serial number, and an element value in the historical passenger mapping set is a exclusive non-common item sets.

12. The apparatus as claimed in claim 11, wherein the extraction unit is configured to:
traverse all record items starting from a header of the unreserved check-in passenger reservation record;
sequentially judge whether each of the record items has a passenger identifier for judging whether a record item is a passenger name item;
when the record item is the passenger name item, judge whether the record item is an existing passenger item based on whether the record item has an existing passenger item identifier;
when the record item is the existing passenger item, judge whether the passenger name item is updated by a departure check-in record based on a departure update identifier; and
when the passenger name item is updated by the departure check-in record, update corresponding data in a reservation passenger name record to a surname field and a first name field in the passenger name item.

13. The apparatus as claimed in claim 11, wherein the extraction unit is configured to:
traverse all the record items starting from a header of the unreserved check-in passenger reservation record;
sequentially judge whether each of the record items has a passenger identifier for judging whether a record item is a passenger name item;
when the record item is the passenger name item, judge whether the record item is the historical passenger item based on whether the record item has a historical passenger item identifier;
when the record item is the historical passenger item, judge whether the passenger name item is updated by a departure check-in record based on a departure update identifier; and
when the passenger name item is updated by the departure check-in record, update corresponding data in a reservation passenger name record to a surname field and a first name field in the passenger name item.

14. The apparatus as claimed in claim 11, wherein the set determination unit comprises a common item set determination subunit;
wherein the common item set determination subunit is configured to:
judge whether there is a subsequent item in the unreserved check-in passenger reservation record;
when there is the subsequent item in the unreserved check-in passenger reservation record, judge whether an identification value of the subsequent item is a preset identification value for representing the common item;
when the identification value of the subsequent item is the preset identification value for representing the common item, determine that the subsequent item is the common item, and continue to judge whether the subsequent item is a responsibility team item; and
extract the subsequent item to the common item set when the subsequent item is not the responsibility team item.

15. The apparatus as claimed in claim 14, wherein the common item set determination subunit is further configured to:
judge whether the subsequent item has an existing identifier when the subsequent item is the responsibility team item; and
determine that the responsibility team item is found, and set a responsibility team finding tag as true when the subsequent item has the existing identifier.

16. The apparatus as claimed in claim 14, wherein the common item set determination subunit is further configured to:
judge whether the subsequent item is a name item when the subsequent item is not the common item;
judge whether the passenger identifier in the subsequent item is 0 when the subsequent item is not the name item; and
extract the subsequent item to the common item set when the passenger identifier is 0.

17. The apparatus as claimed in claim 16, wherein the set determination unit comprises an existing item set determination subunit;
wherein the existing item set determination subunit is configured to:
judge whether the responsibility team finding tag is true when the subsequent item is the name item; and
extract the subsequent item to the existing passenger name set when the responsibility team finding tag is not true.

18. The apparatus as claimed in claim 17, wherein the set determination unit comprises a historical item set determination subunit;
wherein the historical item set determination subunit is configured to:
extract the subsequent item to the historical passenger name set when the responsibility team finding tag is true.

19. The apparatus as claimed in claim 11, wherein the existing mapping set determination unit is configured to:
judge whether an existing passenger name has a subsequent item;
when the existing passenger name has a subsequent item, initialize the passenger information;
judge whether there is the subsequent item in the passenger reservation record;
when there is the subsequent item in the passenger reservation record, judge whether the common item or the name item has been processed;
judge whether a current passenger reservation record item belongs to a current passenger when the common item or the name item is not processed; and
when the current passenger reservation record item belongs to the current passenger, initialize passenger reservation record node information, store the existing passenger serial number, and associate the existing passenger serial number to the existing passenger information.

20. The apparatus as claimed in claim 11, wherein the historical mapping set determination unit is configured to:
judge whether a historical passenger name has a subsequent item;
when the historical passenger name has the subsequent item, initialize the passenger information;
judge whether there is the subsequent item in the passenger reservation record;
when there is the subsequent item in the passenger reservation record, judge whether the common item or the name item has been processed;
judge whether a current passenger reservation record item belongs to a current passenger when the common item or the name item is not processed; and
when the current passenger reservation record item belongs to the current passenger, initialize passenger reservation record node information, store the historical passenger serial number, and associate the historical passenger serial number to the historical passenger information.
